# EUROPÄISCHE PATENTSCHRIFT

(11) **EP 0 335 993 B1**
(45) Veröffentlichungstag und Bekanntmachung des Hinweises auf die Patenterteilung: **21.07.1993**
(21) Anmeldenummer: 88105443.1
(22) Anmeldetag: 06.04.1988
(51) Int. Cl.: B27N 3/14, B65G 69/04

(54) **Verfahren und Vorrichtung zur Erzeugung eines gleichmässigen abzuwerfenden Stromes von Partikeln**
Method and apparatus for obtaining an uniformly distributed stream of particles
Méthode et machine pour obtenir un courant de particules d'une distribution uniforme

(43) Veröffentlichungstag der Anmeldung: 11.10.1989
(73) Patentinhaber: CARL SCHENCK AG, D-64273 Darmstadt (DE)
(72) Erfinder: Kunstmann, Uwe, Dr., D-6101 Rossdorf (DE)
(74) Vertreter: Brandt, Ernst-Ulrich, Dipl.-Phys., Dipl.-Ing.

(56) Entgegenhaltungen:
- DE-A- 2 335 814
- DE-A- 3 007 450
- DE-C- 952 565
- NL-A- 7 900 340
- US-A- 2 737 997
- US-A- 3 929 219
- US-A- 4 345 491

## Beschreibung

Die Erfindung betrifft eine Vorrichtung zur Erzeugung eines gleichmäßigen, über eine Bunkerbreite abzuwerfenden Stromes von Partikeln, wie Fasern aus zellulosehaltigen oder mineralhaltigen Stoffen oder mit Bindemitteln versehene Fasern, Spänen oder Mischungen aus derartigen Partikeln zur Herstellung von Platten aus diesen Stoffen nach einem Startimpuls zur Beschickung eines Bunkers mit einer oberhalb des Bunkers quer zur Bunkerlängsachse sich erstreckenden, während der Beschickung stetig arbeitenden Eintragsvorrichtung und einer seitlich vom Bunker angeordneten feststehenden Aufgabe.

Bei der Herstellung von Platten aus beleimten Spänen, sogenannten Spanplatten, oder zur Herstellung von Platten aus Holzfasern oder Fasern aus Papier oder Platten, die aus Mischungen von Zellulosefasern und Spänen bestehen, bei welchen als Bindemittel Wasser und Gips zugesetzt werden, ist es erforderlich, vor der Herstellung derartiger Platten diese Partikel zu bunkern. Der wesentliche Grund für eine derartige Bunkerung besteht darin, daß bei der kontinuierlichen Herstellung von Vliesen aus diesen Partikeln eine stets gleichmäßige Menge dieser Partikel vorhanden sein muß, um hierdurch bei der Herstellung, beispielsweise Fehler im spezifischen Gewicht oder in der Dichte zu vermeiden.

Bei einer derartigen Zwischenbunkerung ist jedoch auch darauf zu achten, daß jeweils gleichlang gelagertes Gut der Weiterverarbeitung zugeführt wird, insbesondere dann, wenn es sich um beleimte Späne zur Herstellung von Spanplatten handelt oder wenn es sich um die Herstellung von MDF (Medium Densitive Fibers), die ebenfalls bereits beleimt sind, zur Herstellung von MDF-Platten handelt. Um dies zu erreichen, ist das sogenannte Prinzip der "first in - first out" Bunkerung zu verwenden. Sollen Partikel jedoch in einem Bunker vermischt werden, beispielsweise zur Vermischung von Zellulosefasern mit Holzspänen, so ist eine first in - first out Einlagerung nicht geeignet, sondern es ist erforderlich, daß die Partikel der jeweiligen Sorte übereinander eingelagert werden und anschließend durch ein Abtragen der Stirnwand mittels Kratzerwalzen abgefräßt werden, da bei der Bewegung des Bodenbandes des Bunkers gegen die Kratzerwalzen eine eindeutige Vermischung erreicht wird.

Ganz allgemein ist auch bei einer Zwischenbunkerung dafür Sorge zu tragen, daß keine Inseln höherer Dichte, sogenannte Nester, innerhalb der gebunkerten Partikel auftreten und daß die oberste Partikelschicht keine Unebenheiten quer und längs zur Bunkerlängsachse aufweist, damit nicht beim Abfräsen durch die Kratzerwalzen Störungen in der Zusammensetzung und in der Menge auftreten. Zur Vergleichmäßigung der obersten Schicht wird ein sogenannter Rückstreifer im oberen Bereich des Bunkers, der sich über die gesamte Bunkerbreite erstreckt, verwendet und dessen vorlaufendes Rückstreifertrum entgegen dem vorlaufenden Trum des Bodenbandes umläuft.

Durch die DE-PS 30 31 864 ist ein Verfahren und eine Vorrichtung zum Beschicken eines derartigen Zwischenbunkers bekannt geworden, bei der im wesentlichen nach einem Einspeicherbefehl, der vom Bunker ausging und der beispielsweise signalisierte, daß die im Bunker noch vorhandene Materialmenge aufgefüllt werden mußte, oberhalb des Bunkers kontinuierlich ein der Bunkerbreite entsprechender gleichmäßig verteilter Spänevorrat geschaffen wurde, der anschließend abgeworfen wurde. Hierzu eignete sich insbesondere eine über die gesamte Bunkerbreite sich erstreckende Förderschnecke, die nach entsprechender Befüllung mit Spänevorrat diesen über einen in einem beweglichen Trog befindlichen Abwurfschlitz über die gesamte Breite des Bunkers abgab. Eine derartige Einrichtung neigt bei zur Zusammenballung neigenden Partikeln bei einer Vorbereitung zur gleichmäßigen Abgabe zur Verdichtung der Partikel oder zur Verklebung der Partikel mit den Transportmitteln, so daß bei einem Abwurf über die Breite die Gewähr nicht dafür gegeben ist, gleich verteiltes Gut im Bunker vorrätig zu halten; es besteht die Gefahr der Nesterbildung.

Durch die DE-PS 952 565, die eine Vorrichtung zur Bildung gleichmäßiger Aufschüttungen von Holzspangut oder anderem schüttfähigem Gut betrifft, wird Gleichmäßigkeit durch eine, das in gleichmäßigem Strom ankommende Gut erfassende und in oder entgegen der Bewegungsrichtung der Schüttunterlage werfende schmale gleichmäßig über die Schüttbreite hin- und herbewegte, an sich bekannte Wurfvorrichtung erreicht. Mit einer derartigen Wurfvorrichtung läßt sich eine gleichmäßige Belegung eines Bunkers in Richtung seiner Längsachse und quer dazu nicht erreichen, da das über ein Förderband ankommende Material durch die Einwirkung der Wurfvorrichtung separiert wird, so daß in bestimmten Bereichen am Beispiel von Holzspänen erklärt, nur große Holzspäne oder schwere Späne und in einem anderen Bereich quer zur Längsachse des Bunkers nur kleine oder leichte Partikel abgelegt werden. In dieser Patentschrift wird noch eine weitere Zuführung beschrieben, bei der über ein schwenkbares Rohr abzulegende Partikel ausgetragen werden, die jedoch zufolge ihrer Austrittsgeschwindigkeit ebenfalls wieder separiert nach Größe und Gewicht abgelegt werden.

Ausgehend von diesem Stand der Technik besteht die, der Erfindung zugrundeliegende Aufgabe darin, zur Zusammenballung neigende Partikel bei einer Vorbereitung zur gleichmäßigen Abgabe in einen Bunker nicht zusammenzuballen oder zu verdichten bzw. zu verkleben und auch innerhalb des Bunkers bei einer Vergleichmäßigung der obersten Schicht des Eingetragenen ein ungleichmäßiges Zusammenballen der Partikel zu vermeiden. Diese Aufgabe wird durch die kennzeichnenden Merkmale des Anspruchs 1 gelöst. Durch Beibehalten der gleichen relativen Förderbandgeschwindigkeit unter der Aufgabe, bei Vorschub und Rückzug des Förderbandes wird eine gleichmäßige Verteilung eines abzuwerfenden Partikelstroms vorbereitet, gleichzeitig wird bei der Ablage des Stroms über die gesamte Breite des Bunkers eine Veränderung bzw. eine Höhenrückenbildung vermieden, so daß bei einer nachfolgenden Begradigung der oberen Schicht durch einen Rückstreifer ein Zusammenballen ebenfalls nicht auftreten kann. Es wird gleichzeitig die Möglichkeit gegeben, eine Beschickung des Bunkers quer zur Längsachse beim Vorschub und Rückzug des Förderbandes ohne Veränderung der Zusammensetzung der vorbereiteten Partikel zu bewirken.

Zwar ist aus der US-A 3929219 eine Fördereinrichtung bekannt, bei welcher ein Transportband der Materialförderung zwischen einer entfernten Aufgabestation und einem weiteren Transportband dient, jedoch weist diese Einrichtung zwei unabhängig voneinander angesteuerte Antriebe auf, welche lediglich durch die Zwischenschaltung eines Differentialgetriebes eine Geschwindigkeitsaddition der Wagengeschwindigkeit und der Förderbandgeschwindigkeit bewirken. Dies hat unter anderem den Nachteil, daß selbst bei stillstehendem Wagen eine Förderung vom Transportband stattfindet, was einer gleichmäßigen Ablage des Materials in einem Bunker abträglich ist.

Durch die bei der Erfindung vorgesehene Anordnung eines Motors für den gleichzeitigen Antrieb eines hin- und hergehenden Wagens und des in einer Richtung umlaufenden Förderbandes, welches vom Wagen getragen wird, wird erreicht, daß unter Zugrundelegen einer Übersetzung von 1 : 1 zwischen Wagen und stets in einer Richtung umlaufendem Förderband beim Vorschieben des Verschiebewagens in Richtung auf den Bunker von der Aufgabestelle weg kein Streugut in den Streugutbunker abgegeben wird, da das Förderband relativ zum Verschiebewagen selbst keine Bewegung ausführt. Beim Zurückziehen des Wagens erfolgt zum einen die gleichmäßige Abgabe des Partikelstroms in den Streugutbunker, da sich in diesem Falle das Förderband doppelt so schnell in Richtung auf den Streugutbunker bewegt, wie die ihm entgegengerichtete Verschiebebewegung des Verschiebewagens. Damit wird erreicht, daß während des Zurückziehens des Förderbandes durch den Wagen ein lückenloser Anschluß mit gleicher Menge an dem abzugebenden Partikelstrom erzeugt wird; wobei zufolge der konstanten Relativgeschwindigkeit des Bandes zur Aufgabe der anschließende Strom zeitlich dieselbe Menge wie der abzuwerfende Partikelstrom besitzt. Durch das erfindungsgemäße Vorsehen einer Begrenzungsschurre am vorderen Ende des Wagens wird dem Separiereffekt einer sich ausbildenden Wurfparabel entgegengewirkt. Dieser Barriereeffekt wird bis zum Wandbereich der anderen Bunkerwand aufrecht erhalten, so daß keine Eintragsfehler und zwar weder in Bezug auf Separierfehler oder Böschungsfehler an den Seitenwänden der Bunkerwand auftreten können. Ist das Übersetzungsverhältnis veränderbar, wie in Anspruch 1 unter Schutz gestellt, so läßt sich erfindungsgemäß eine Befüllung des Bunkers quer zu seiner Längsachse auch beim Vorschieben und Zurückziehen des Förderbandes durch den Wagen erreichen, wobei auch hier wiederum eine gleichmäßige Befüllung über einen breiten Bereich in Längsrichtung des Bunkers bewirkt wird. Hierdurch wird auch die Begradigung der oberen, im Bunker befindlichen Schicht durch einen Rückstreifer erreicht im Gegensatz zum Stand der Technik, bei dem eine Befüllung des Bunkers quer zu seiner Längsrichtung durch Eingabe von Hügeln, die quer zur Bunkerlängsrichtung sich erstrecken, bewirkt wird und wobei dann durch den Rückstreifvorgang eine Nesterbildung verstärkt werden kann.

In Ausgestaltung des Erfindungsgegenstandes gemäß den kennzeichnenden Merkmalen des Anspruchs 2 besitzt erfindungsgemäß ein auf einer Grundplatte angeordneter Motor zwei Antriebsscheiben an seiner Antriebswelle und es sind erfindungsgemäß die für den Wagen vorgesehene Umlenkscheibe und die für das Förderband vorgesehene Umlenkscheibe ebenfalls an der Grundplatte angeordnet. Als Antriebsmittel zwischen den Antriebsscheiben auf der Motorwelle und den Umlenkscheiben können bevorzugt Ketten oder Zahnriemen treten. Gemäß Anspruch 2 besitzt das Antriebsmittel für den Wagen einen Mitnehmer, im einfachsten Falle einen Gleitstein, der auf einem, im Antriebsmittel angeordneten Zapfen rotationsbeweglich angeordnet ist und der mit einer am Wagen angeordneten Mitnahmeeinrichtung, in diesem Falle mit einer Gleitführung erfindungsgemäß verbunden ist und so den Wagen zum Vorschub und Rückzug antreibt, gleichzeitig wird erfindungsgemäß das zwischen der anderen Antriebsscheibe und der zweiten Umlenkscheibe angeordnete Antriebsmittel als Antrieb für das Förderband verwendet.

In noch weiterer Ausgestaltung des Erfindungsgegenstandes wird gemäß Anspruch 3 vorgeschlagen, daß der Achsabstand zwischen Antriebsscheibe und Umlenkscheibe für den Wagenantrieb höchstens gleich oder kleiner als der Achsabstand zwischen der anderen Antriebsscheibe und der für den Antrieb des Förderbandes vorgesehenen zweiten Umlenkscheibe ist. Hierdurch läßt sich in einfachster Form ein Justieren der kompletten Beschickvorrichtung zum Bunker ermöglichen, ohne daß Fehlschüttungen neben dem Bunker erfolgen. Die Justierung vereinfacht sich hierbei dann zu einer Verschiebung der Gesamtanlage quer zum Bunker, wenn der Achsabstand zwischen Antriebsscheibe und Umlenkscheibe für den Wagenantrieb an die jeweilige Bunkerbreite angepaßt ist.

Eine Ausgestaltung des Erfindungsgegenstandes gemäß Anspruch 4 sieht vor, die Antriebsrolle des endlosen Förderbandes zwischen zwei im vorlaufenden Trum des Antriebsmittels angeordnete Umlenkrollen einzuschlagen. Durch eine derartige Umschlingung wird auch ein zusätzliches Rutschen und damit ein Außertaktgeraten der beiden überlagerten Bewegungen gleichsinnige Bewegung des Förderbandes und hin- und hergehende Bewegung des Wagens eindeutig vermieden.

Die Ausführung gemäß Anspruch 5 sieht vor, daß der einzige Antrieb zweigeteilt, nämlich als ein Motor für die Wagenverschiebung, der einen Antriebsmotor für das Förderband zwangssteuert, ausgeführt ist. Es ist also statt einer mechanischen proportionalen Kopplung zwischen Wagengeschwindigkeit und Bandgeschwindigkeit eine elektrische Kopplung vorgesehen, wodurch sich konstruktive Vorteile ergeben.

Das Besondere dieser Vorrichtung liegt darin, daß als Antrieb für den Wagen nicht nur ein Elektromotor, sondern auch ein hin- und hergehendes Schubgestänge verwendet werden kann. Hierbei wird erfindungsgemäß elektrisch oder elektronisch die Bewegung des Wagens abgetastet und als Sollwert einem Regler zugeführt, dem andererseits der Istwert eines regelbaren Gleichstrommotors für den Förderbandantrieb zugeführt wird. Damit läßt sich der Förderbandantrieb auch regeln, wenn ein Schubgestänge zum Wagenantrieb verwendet wird, welches funktionsbedingt an den Umkehrlagen verharrt. Eine derartige Unstetigkeit in der Bewegung des Wagens, die auch eine Unstetigkeit in der Belegung des Bunkers hervorruft, stellt bei derartigen Einfachanlagen einen zu vernachlässigenden Belegungsfehler über die Breite des Bunkers dar, der durch die beibehaltene zwangsläufige Nichtverballung des Gutes ausgeglichen wird.

In noch weiterer Ausgestaltung des Erfindungsgegenstandes wird das Förderband gemäß Anspruch in seinem vorlaufenden Trum als Muldenband ausgebildet. Hierdurch wird zum einen verhindert, daß in den Bunker abzulegendes Fördergut vom Förderband abfällt und zu einer Verschmutzung der Anlage führt und zum anderen wird gleichzeitig insbesondere bei klebendem Material durch Auflösen der Muldenform im Bereich der vorderen Umlenkung des endlosen Förderbandes ein Anbacken des Partikelstroms am Förderband verhindert, was durch die erfindungsgemäße Ausgestaltung gemäß Anspruch 7 noch verstärkt wird durch Anordnung einer Bandreinigung an der vorderen Umlenkstelle des Förderbandes. Hierdurch wird auch ein Verschmutzen der Anlage durch das rücklaufende Trum eindeutig vermieden und es werden hierdurch zwangsläufig alle Partikel in den Bunker eingetragen.

Durch die so offenbarte Erfindung läßt sich ein Zwischenbunker zur Zwischenbunkerung von Partikeln zur Herstellung von Platten aus diesen Partikeln gleichmäßig mit den verschiedensten Partikeln und deren Mischungen, wie Zellulosefasern, Mineralfasern und Spänen im beleimten und unbeleimten Zustand beschicken, ohne daß die bisherigen Schwierigkeiten in Bezug auf eine Zusammenballung, Verklebung oder Verdichtung des Materials durch die Eintragsorgane geschieht, oder daß zufolge Ausbildens von Wurfparabeln die physikalische Zusammensetzung, also das Gemengebild, verändert wird.

In der nachfolgenden Zeichnung wird die Erfindung anhand eines Ausführungsbeispiels näher erläutert.

Der Erfindungsgegenstand wird schematisch dargestellt und es zeigen:
- Fig. 1: eine Ansicht der Beschickeinrichtung mit einem Schnitt durch den quer zu seiner Längsrichtung zu beschickenden Bunker
- Fig. 1a: eine vergrößerte Darstellung des Abwurfbandes einschließlich Begrenzungsschurre und Abstreifer
- Fig. 2: eine Anordnung nach Fig. 1 in Draufsicht
- Fig. 2a: einen Schnitt 2A durch die Anordnung nach Fig. 2
- Fig. 3: einen Schnitt durch den Bunker mit zur Bunkerlängsachse quer angeordneter Beschickung und
- Fig. 4: eine Ansicht einer Beschickeinrichtung, bei der getrennte Antriebe für die Verschiebung des Abwurfbandes und den Antrieb des Abwurfbandes vorgesehen sind.

In den Figuren vorkommende gleiche Bauteile werden mit denselben Bezugsziffern bezeichnet.

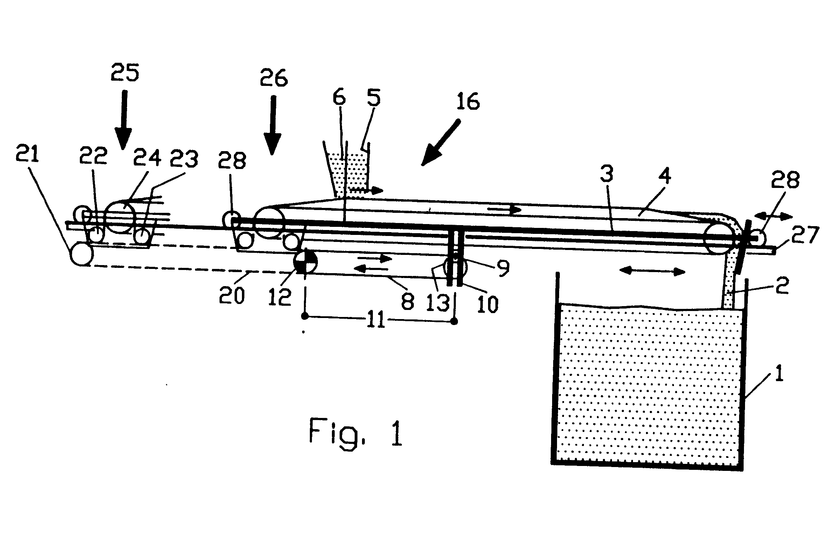

Zur gleichmäßigen Beschickung eines Bunkers 1 mit einem Partikelstrom 2 wird gemäß Ausführungsbeispiel nach Fig. 1 ein auf einem Wagen 3 angeordnetes Förderband 4 auf einer Aufgabe 5 mit Partikeln 6 versorgt. Bei den Partikeln 6 kann es sich um unbeleimte oder beleimte Zellulose- oder Mineralfasern handeln bzw. aus Mischungen derartiger Fasern oder aus Spänen und Mischungen aus Spänen mit Fasern oder Fasermischungen.

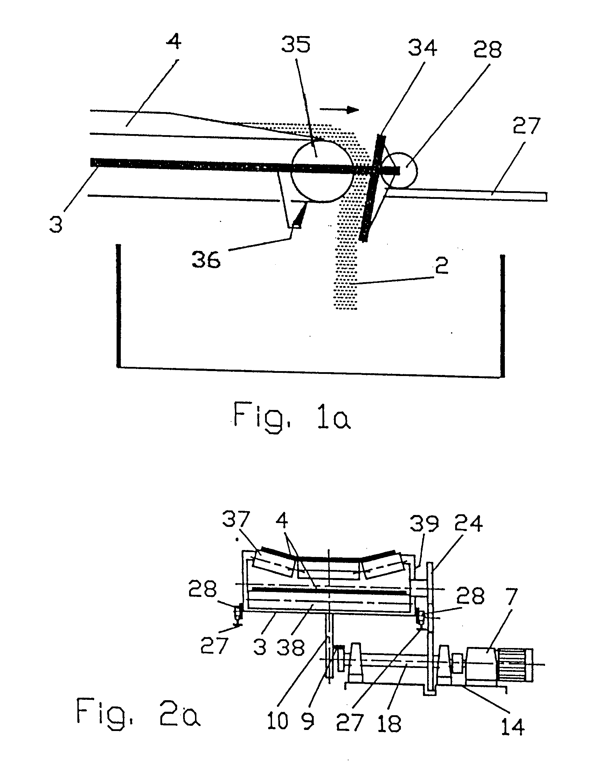

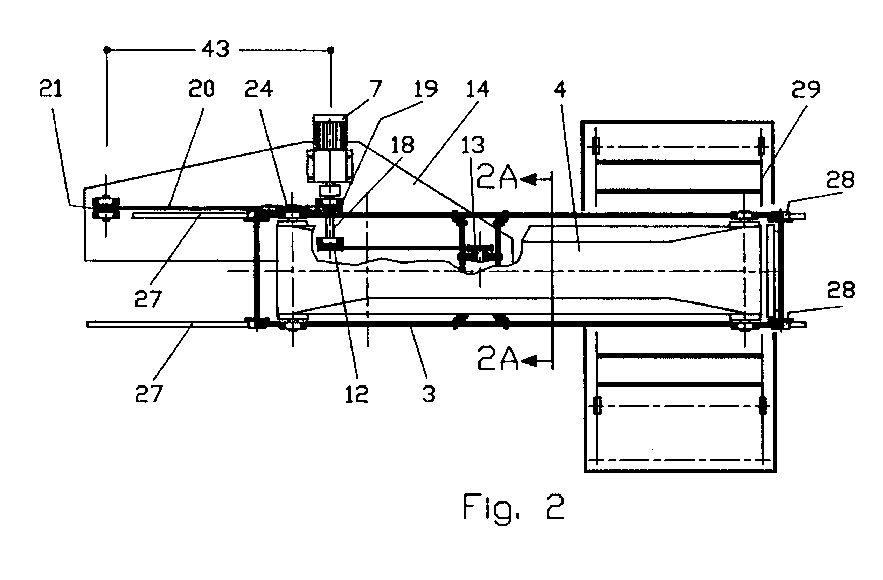

Zufolge Antrieb des Förderbandes 4 über einen Antriebsmotor 7 (vgl. Fig. 2 und Fig. 2a), bewegt sich das vorlaufende Trum des Förderbandes 4, welches als endloses Förderband ausgebildet ist, stets in Richtung auf den Bunker 1 zu, während das rücklaufende Trum des Förderbandes 4 stets in entgegengesetzter Richtung umläuft. Der Wagen 3 wird ebenfalls von dem Antriebsmotor 7 über ein endloses Antriebsmittel 8 gleichzeitig angetrieben. Durch den Antrieb mittels endlosem Antriebsmittel 8, welches als Zahnriemen oder Kette ausgebildet sein kann, an der ein Mitnehmer 9 angeordnet ist (vgl. Fig. 2a), wird der Wagen 4 mit einer am Wagen 4 angeordneten Mitnahmeeinrichtung 10 zu einer hin- und hergehenden Bewegung veranlaßt, deren Amplitude einem einstellbaren Achsabstand 11 zwischen einer Antriebsscheibe 12 und einer Umlenkscheibe 13 entspricht. Der einstellbare Achsabstand 11 zwischen Antriebsscheibe 12 und auf einer Grundplatte 14 (vgl. Fig. 2) angeordneten Umlenkscheibe 13 ist erforderlich, um verschieden breite Bunker 1 mit derselben Beschickeinrichtung gleichmäßig mit einem Partikelstrom 2 verfüllen zu können.

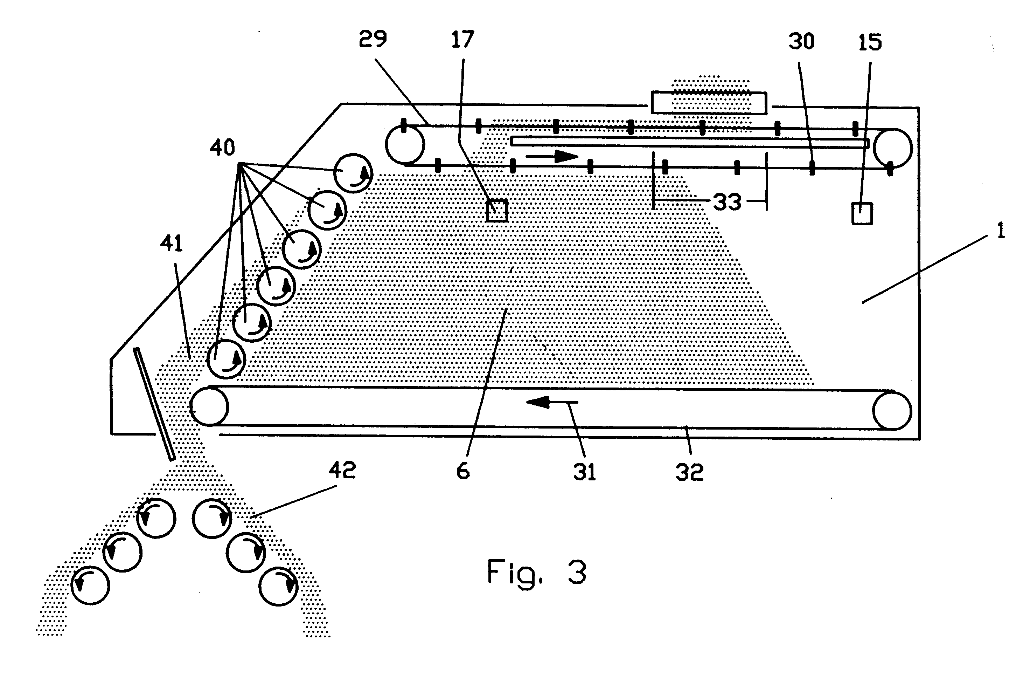

Nachdem der Bunker 1 erstmals gefüllt wurde, was beispielsweise durch Endschalter 15 (vgl. Fig. 3) einer Schaltzentrale mitgeteilt wird, wird die im wesentlichen aus Wagen 3, endlosem Förderband 4, Aufgabe 5 und Motor 7 bestehende Einspeichervorrichtung 16 am linken Seitenrand des Bunkers 1 stillgesetzt. Durch Entnahme von Partikeln 6 aus dem Bunker 1 zur Herstellung von Platten, nimmt der Inhalt des Speichers so lange ab, bis über einen weiteren Endschalter 17 der Einspeichervorrichtung 16 der Befehl zum Einspeichern neuer Partikel übermittelt wird. Hierdurch wird der auf der Grundplatte 14 angeordnete Motor 7 in Gang gesetzt und treibt über seine Antriebswelle 18 gleichzeitig die Antriebsscheibe 12 und über diese die Umlenkscheibe 13 und eine andere Antriebsscheibe 19 und über diese mittels eines weiteren Antriebsmittels 20 eine am Grundkörper 14 angeordnete weitere Umlenkscheibe 21 an. Dadurch treibt das weitere Antriebsmittel 20, welches ebenfalls als endloser Kettentrieb oder Zahnriemen ausgebildet sein kann über Umlenkrollen 22, 23 eine Antriebsrolle 24 des endlosen Förderers 4 an.

Befinden sich in der Aufgabe 5 Partikel 6, so schließen sich diese an die bereits vorhandenen, auf dem Förderband 4 befindlichen Partikel 6, die vom vorhergehenden Einspeichervorgang noch nicht vom endlosen Förderband 4 als Förderstrom 2 gleichmäßig in den Bunker 1 eingetragen wurden, in der gleichen Menge lückenlos an, während das Förderband bei gleicher Übersetzung zum Motor wie der Wagen zum Motor stillstehend aus einer Ruhelage 25 zu einer Abwurflage 26 durch Verschieben des Wagens auf Schienen 27 über Rollen 28 verbracht wird.

Nach Überschreiten der Abwurflage 26 wird über das endlose Antriebsmittel 8 und den Mitnehmer 9 der Wagen 3 durch seine Mitnahmeeinrichtung 10 in Richtung auf die Ruhelage 25 zurückbewegt, gleichzeitig hiermit wird vom endlosen Förderband, dessen Geschwindigkeit nunmehr von 0 zur doppelten Geschwindigkeit ansteigt, ein gleichmäßiger Förderstrom 2 über die Breite des Bunkers 1 in den Bunker entlassen. Hierbei bewegt sich nunmehr das endlose Förderband 4 von rechts nach links und wird gleichzeitig zufolge seiner doppelten Geschwindigkeit bei gleicher Übersetzung zwischen Motor und Wagen und Motor und Förderbandantrieb stetig mit einer Partikelmenge 6 versehen, wie sie durch den Partikelstrom 2 in den Bunker 1 über dessen Breite abgegeben wird. Gleichzeitig läuft während des Einspeichervorgangs eine Rückstreifeinrichtung 29 (vgl. Fig. 2 und 3) mit seinem vorlaufenden Trum 30 entgegen dem auch während der Beschickung in Pfeilrichtung 31 stetig umlaufenden Bodenband 32 des Bunkers 1. Damit wird das über eine Teillänge 33 des Bunkers abgelegte Partikelmaterial mit Hilfe der Rückstreifeinrichtung 29 an die bereits eingespeicherten Partikel angelagert, ohne daß durch Ungleichmäßigkeiten während des Eintrags eine Nesterbildung zwischen den bereits eingelagerten und neu hinzukommenden Partikeln auftritt.

Die Einspeicherung wird so lange fortgesetzt, bis über den Endschalter 15 die Einspeichervorrichtung 16 am linken Rand des Bunkers 1 stillgesetzt wird.

Das in Fig. 1a in vergrößertem Maßstab dargestellte vordere Abwurfende des endlosen Förderbandes 4 zeigt eine Begrenzungsschurre 34, die zwischen den auf den parallel angeordneten Schienen 27 laufenden Rollen 28 angeordnet ist und die stets denselben Abstand zur vorderen Umlenkrolle 35 des endlosen Förderbandes 4 besitzt. An der vorderen Umlenkrolle 35 ist gleichzeitig ein Abstreifer 36 angeordnet, der sich am Wagen 3 abstützt und der in Wirkverbindung mit dem rücklaufenden Trum des endlosen Förderbandes 4 gebracht wird. Damit wird erreicht, daß auch nach dem Bandabwurf am endlosen Förderband 4 noch anklebendes Partikelmaterial eindeutig im selben Ablagevorgang gleichmäßig dem Partikelstrom 2 wieder zugefügt wird, während durch die Begrenzungsschurre 34 eine Separierung des Partikelstroms 2 eindeutig vermieden wird.

In Fig. 2a ist in vergrößertem Maßstab eine Muldung des endlosen Förderbandes 4 im vorlaufenden Trum dieses Förderbandes durch einen dargestellten Girlandenrollensatz 37 dargestellt. Während das rücklaufende Trum des endlosen Förderbandes 4 über gerade Stützrollen 38 zurückgeführt wird. Der Rahmen 39 des endlosen Förderbandes 4 ist mit dem Wagen 3 verbunden.

Gemäß Fig. 3 werden die im Bunker 1 eingelagerten Partikel 6 über in Pfeilrichtung umlaufende Kratzerwalzen 40 aus dem Partikelvorrat entnommen und als Schüttstrom 41 beispielsweise über einen Verteiler 42 nicht dargestellten Einrichtungen zur Erzeugung von Platten aus Fasern oder Spänen oder Mischungen dieser zugeführt.

Wird das Übersetzungsverhältnis zwischen den auf der Antriebswelle 18 des Antriebsmotors 7 vorhandenen anderen Antriebsscheibe 19 und der weiteren Umlenkscheibe 21 so geändert, daß die Antriebsrolle 24 des Förderbandes 4 mit erhöhter Geschwindigkeit umläuft, wird erreicht, daß bei gleichbleibender Belegung des Förderbandes 4 mit Partikeln 6 auch bei der Fahrt des Wagens 3, bei der sich die Ruhelage 25 des Förderbandes 4 zur Abwurflage 26 des Förderbandes 4 bewegt, bereits ein gleichmäßiger Partikelstrom in den Bunker 1 abgegeben wird. Damit wird eine wesentliche Verkürzung bei der Beschickung des Bunkers 1 erreicht.

Die Einspeichervorrichtung 16 kann dann an verschieden breite Bunker 1 angepaßt werden, wenn der Achsabstand 11 zwischen der Umlenkscheibe 13 und der Antriebsscheibe 12 verändert wird. Hierbei ist lediglich zu berücksichtigen, daß der Achsabstand 11 maximal gleich dem anderen Achsabstand 43 zwischen der anderen Antriebsscheibe 19 und der weiteren Umlenkscheibe 21 wird. Damit kann die Einspeichervorrichtung lediglich durch Änderung der Gurtbreite des endlosen Förderbandes 4 und durch Änderung des Achsabstandes 11 den verschiedenen Bunkerbreiten angepaßt werden.

Es wird als unter den Umfang der Erfindung angesehen, wenn anstelle des einen Motors 7 mit einer Antriebswelle 18 ein Motor vorgesehen wird, der zwei Wellenenden besitzt und auch wenn anstelle des einen Antriebsmotors 7 zwei Antriebsmotoren vorgesehen sind, die in ihrer Geschwindigkeit entsprechend aneinander angepaßt sind, daß die Gewähr dafür gegeben ist, daß beim Vorschieben und Zurückziehen des Förderbandes 4 unter der feststehenden Aufgabe 5 das Förderband 4 stets gleiche Relativgeschwindigkeit zur Aufgabe 5 besitzt.

Es wird auch eine Ausführung als unter den Schutz der vorliegenden Erfindung fallend gesehen, wenn für den Antrieb des Wagens anstelle eines Elektromotors eine vom Antriebsmotor 7 angetriebene Zahnstange verwendet wird, zum Zwecke des Hin- und Herbewegens des Wagens 3 oder wenn ein hydraulischer Antrieb die Hin- und Herbewegung des Wagens 3 bewirkt, dergestalt, daß die Relativgeschwindigkeiten des endlosen Förderbandes 4 zur Aufgabe 5 beim Vorschieben ünd Zurückziehen gleich sind.

Bei den im Ausführungsbeispiel gemäß der Fig. 1 bis 3 verwendeten Antriebe und Antriebsmittel bzw. Umlenkungen wird insbesondere bei der Umlenkung des Wagens 3 von der Vorwärtsbewegung zum Zurückziehen ein steter Verlauf auftreten, der abgestimmt ist auf die Beschleunigung des Förderbandes von der Beschleunigung 0 bei der Vorwärtsbewegung des Wagens 3, wenn Wagen 3 und Förderband 4 bei gleicher Übersetzung die gleiche Geschwindigkeit besitzen, zu einer Beschleunigung, die der doppelten Geschwindigkeit des endlosen Förderbandes 4 beim Zurückziehen des Wagens 3 entspricht. Werden die o. g. äquivalent wirkenden Antriebe Zahnstange oder ein pneumatischer Antrieb verwendet, ist ein steter Nulldurchgang bzw. ein steter Übergang von der Vorwärtsbewegung zur Rückwärtsbewegung des Wagens nicht gegeben, sondern dieser Übergang kann nur durch einen Stillstand des Wagens zwischen Vorschieben und Zurückziehen erreicht werden.

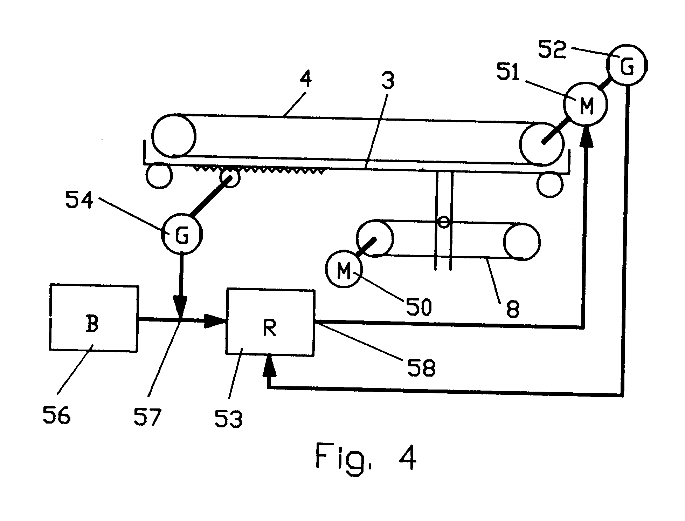

Bei der in Fig. 4 dargestellten Beschickeinrichtung wird das Förderband von einem, mit einem Tachogenerator 52 verbundenen Antriebsmotor 51 angetrieben, während ein hiervon getrennt angeordneter Motor 50 über das endlose Antriebsmittel 8 den Wagen 3 im Ausführungsbeispiel stetig hin- und herbewegt. Anstelle des Antriebsmotors 50 und Antriebsmittels 8 könnte auch ein Stangenantrieb treten, bei dem eine hin- und hergehende Bewegung des Wagens 3 ausgeführt wird und wobei der Wagen 3 an den Umkehrpunkten jeweils verharrt. Über einen weiteren Tachogenerator 54 wird die Bewegung des Wagens abgetastet, so daß ein Signal entsteht, welches proportional der Wagenbewegung ist und welches je nachdem, ob Vorschub oder Rückzug des Wagens 3 eine positive oder negative Spannung erzeugt. Dieses Signal wird einer von einer Gleichspannungsquelle 56 abgegebenen Gleichspannung aufgeprägt, so daß an einem Verzweigungspunkt 57 der Sollwert für die Bewegung des Wagens vorhanden ist. Dieser Sollwert wird einem Regler 53 zugeführt, dem andererseits vom Tachogenerator 52 der Istwert zugeführt wird. Somit steht am Ausgang 58 des Reglers 53 eine Steuerspannung für den Motor 51 zur Verfügung, mittels der der Antriebsmotor 51 so mit seiner Geschwindigkeit geregelt wird, daß stets die gleiche Abwurfmenge in den Bunker abgeworfen wird.

Die Geschwindigkeit des endlosen Förderbandes paßt sich somit der Verschiebebewegung des Wagens 3 in der Weise an, daß die relativen Geschwindigkeiten des Förderbandes 4 bzw. der Aufgabe beim Vorschub und Rückzug gleich sind. Wie bereits ausgeführt, wird es hierdurch ermöglicht, anstelle des Antriebs für den Wagen 3 mittels umlaufender Kette und Mitnehmerbolzen einen vor- und zurücklaufenden Mitnehmerstab zu verwenden, der beispielsweise durch einen Hydraulikzylinder angetrieben wird.

Auch ist es möglich, den Antriebsmotor 51 des Förderbandes polumschaltbar oder frequenzgesteuert auszuführen. Die Bewegung des Wagens 3 kann in diesem Falle über Schaltelemente gefahren werden, welche eine Position des Bandwagens erkennen. Mittels Steuerschalter läßt sich auf diese Weise die Geschwindigkeit des Förderbandes 4 regulieren, so daß auch hier die relativen Geschwindigkeiten des Bandes 4 zur Aufgabe 5 gleich sind.

## Patentansprüche

1. Vorrichtung zur Erzeugung eines gleichmäßigen über eine Bunkerbreite abzuwerfenden Stromes von Partikeln wie Fasern aus zellulosehaltigen oder mineralhaltigen Stoffen oder mit Bindemitteln versehenen Fasern oder Spänen oder Mischungen aus derartigen Partikeln, zur Herstellung von Platten aus diesen Stoffen mit einer oberhalb eines Bunkers (1) quer zur Bunkerlängsachse sich erstreckenden, während der Beschickung stetig arbeitenden Einspeichervorrichtung (16) und einer seitlich vom Bunker (1) angeordneten feststehenden Aufgabe (5) dadurch gekennzeichnet, daß zwischen der Aufgabe (5) und dem Bunker (1) ein im wesentlichen horizontal umlaufendes, endloses Förderband (4) auf einem auf Schienen (27) eine hin- und hergehende Bewegung durchführenden Wagen (3) angeordnet ist, daß ein Antrieb (7) gleichzeitig und stetig sowohl den Wagen (3) über ein Antriebsmittel (8) als auch das endlose Förderband (4) über ein weiteres Antriebsmittel (20) in einer Förderrichtung antreibt, daß die Übersetzung der Kopplung zwischen dem mindestens einen Antriebsmotor (7) und dem Wagen (3) einerseits und dem endlosen Förderband (4) andererseits mindestens 1 : 1 beträgt, daß am vorderen Ende des Wagens (3) eine Begrenzungs schurre (34) angeordnet ist, und daß sich die Aufgabe (5) über die Breite des endlosen Förderbandes (4) er streckt.

2. Vorrichtung nach Anspruch 1, dadurch gekennzeichnet, daß an einer Antriebswelle (18) des auf einer Grundplatte (14) angeordneten Antriebsmotors (7) zwei Antriebsscheiben (12, 19) vorgesehen sind, daß die eine Antriebsscheibe (12) mit einer an der Grundplatte (14) angeordneten Umlenkscheibe (13) über das Antriebsmittel (8) verbunden ist, daß das Antriebsmittel (8) einen Mitnehmer (9) trägt und mit einer am Wagen (3) angeordneten Mitnahmeeinrichtung (10) zusammenwirkt, daß die andere Antriebsscheibe (19) mit einer am Grundkörper (14) angeordneten weiteren Umlenkscheibe (21) über ein weiteres Antriebsmittel (20) verbunden, die Antriebsrolle (24) des endlosen Förderbandes (4) antreibt.

3. Vorrichtung nach Anspruch 2, dadurch gekennzeichnet, daß der Achsabstand (11) zwischen Antriebsscheibe (12) und Umlenkscheibe (8) für den Wagenantrieb höchstens gleich oder kleiner als der andere Achsabstand (43) zwischen der anderen Antriebsscheibe (19) und der für den Antrieb des endlosen Förderbandes (4) vorgesehenen weiteren Umlenkscheibe (21) ist.

4. Vorrichtung nach Anspruch 2, dadurch gekennzeichnet, daß die Antriebsmittel (8, 20) als Zahnriemen ausgebildet sind und daß die Antriebsrolle (24) des endlosen Förderbandes (4) zwischen zwei im vorlaufenden Trum des Zahnriemens (20) angeordnete Umlenkrollen (22, 23) eingeschlagen ist.

5. Vorrichtung nach Anspruch 1, dadurch gekennzeichnet, daß der eine Antrieb durch einen Motor (50) gebildet wird, der den Wagen (3) über Antriebsmittel (8) stetig antreibt und der elektrisch mit einem weiteren Antriebsmotor (51) für das Förderband (4) so gekoppelt ist, daß dessen Antriebsgeschwindigkeit proportional zur Verschiebegeschwindigkeit des Wagens (3) ist.

6. Vorrichtung nach einem oder mehreren der vorhergehenden Ansprüche, dadurch gekennzeichnet, daß das endlose Förderband (4) in seinem vorlaufenden Trum als Muldenband ausgebildet ist.

7. Vorrichtung nach einem oder mehreren der vorhergehenden Ansprüche, dadurch gekennzeichnet, daß das endlose Förderband (4) an seiner Umlenkrolle (35) im rücklaufenden Trum eine Bandreinigung (36) trägt.

8. Vorrichtung nach einem der vorhergehenden Ansprüche, dadurch gekennzeichnet, daß die Partikel (6) nach Verlassen des Förderbandes (4) vor der Ablage im Bunker (1) entlang einer Begrenzungsschurre (34) abgelegt werden.

## Claims

1. System for producing a homogeneous stream of particles for discharge over the width of a bin, such as fibres consisting of cellulose-containing or mineral-containing materials or fibres or chips coated with binding agents or mixtures of such particles with a view to producing plates from these materials, with a feeding device (16) extending transversely to the longitudinal axis of the bin above a bin (1) and working continuously during the charging process as well as a stationary feed hopper (5) arranged at the side of bin (1), characterised in that between feed hopper (5) and bin (1) a continuous and in the main horizontally circulating conveyor belt (4) is arranged on a carriage (3) subject to to-and-fro motion on rails (27), in that a drive (7) drives, at the same time and continuously, both carriage (3) with the aid of a driving means (8) and continuous conveyor belt (4) with the aid of a further driving means (20) in a conveying direction, in that the transmission ratio of the coupling between the at least one drive motor (7) and carriage (3), on the one hand, and the continuous conveyor belt (4), on the other hand, amounts to at least 1 : 1, in that a limiting chute (34) is arranged at the front end of carriage (3), and in that feed hopper (5) extends over the width of continuous conveyor belt (4).

2. System according to claim 1, characterised in that two drive rollers (12, 19) are provided on a drive shaft (18) of drive motor (7) which is arranged on a base plate (14), in that one drive roller (12) is linked, via driving means (8), with a deflection roller (13) arranged on base plate (14), in that driving means (8) comprises a driver (9) and cooperates with a driving device (10) arranged on carriage (3), and in that the other drive roller (19), which is associated, via a further driving means (20), with a further deflection roller (21) arranged on base plate (14), drives drive roller (24) of continuous conveyor belt (4).

3. System according to claim 2, characterised in that axial distance (11) between drive roller (12) and deflection roller (8) for driving the carriage is at the most equal or smaller than the other axial distance (43) between the other drive roller (19) and the further deflection roller (21) for driving continuous conveyor belt (4).

4. System according to claim 2, characterised in that driving means (8, 20) are designed as toothed belts and in that drive roller (24) of continuous conveyor belt (4) is enfolded between two deflection rollers (22, 23) arranged in the moving part of toothed belt (20).

5. System according to claim 1, characterised in that one drive is constituted by a motor (50) which, with the aid of driving means (8), continuously drives carriage (3) and is electrically coupled with a further drive motor (51) for conveyor belt (4) in such a way that its driving velocity is proportional to the traversing velocity of carriage (3).

6. System according to one or several of the above claims, characterised in that the forward moving part of continuous conveyor belt (4) is designed as a troughed belt.

7. System according to one or several of the above claims, characterised in that deflection roller (35) in the returning part of continuous conveyor belt (4) comprises a belt cleaner (36).

8. System according to one of the preceding claims, characterised in that after discharge from conveyor belt (4) and prior to deposition in bin (1) particles (6) are deposited along a limiting chute (34).

## Revendications

1. Dispositif de production d'un courant, à éjecter de façon uniforme sur la largeur d'une trémie, de particules telles que des fibres en matériau à base de cellulose ou contenant un minéral ou de fibres, copeaux-particules ou mélanges avec des liants, en vue de la fabrication de panneaux composés de ces matériaux, avec un dispositif de stockage (16), s'étendant au-dessus d'une trémie (1), transversalement par rapport à son axe longitudinal, travaillant de façon continue pendant le remplissage, et un alimentateur fixe (5), disposé sur le côté de la trémie (1), caractérisé en ce qu'entre l'alimentateur (5) et la trémie (1) est disposée une bande transporteuse (4) sans fin, circulant sensiblement horizontalement, sur un chariot (3) qui effectue un déplacement d'aller et de retour sur des rails (27), en ce qu'un entraînement (7) assure, simultanément et en continu, l'entraînement dans une direction de transport, tant du chariot (3) par l'intermédiaire d'un moyen d'entraînement (8) qu'également de la bande transporteuse sans fin (4), par l'intermédiaire d'un autre moyen d'entraînement (20), en ce que le rapport de transmission du couplage entre le au moins un moteur d'entraînement (7) et le chariot (3), d'une part, et la bande transporteuse sans fin (4), d'autre part, est d'au moins de 1:1, en ce qu'à l'extrémité avant du chariot (3) est disposé une goulotte de limitation (34), et en ce que l'alimentateur (5) s'étend sur toute la largeur de la bande transporteuse sans fin (4).

2. Dispositif selon la revendication 1, caractérisé en ce que, sur un arbre d'entraînement (18) du moteur d'entraînement (7) disposé sur une plaque de base (14) sont prévus deux disques d'entraînement (12,19), en ce que le premier disque d'entraînement (12) est relié, par l'intermédiaire du moyen d'entraînement (8), à un disque de renvoi (13) disposé sur la plaque de base (14), en ce que le moyen d'entraînement (8) porte un organe d'entraînement (9) et coopère avec un dispositif d'entraînement (10) disposé sur le chariot (3), en ce que l'autre disque d'entraînement (19) est relié, par l'intermédiaire d'un autre moyen d'entraînement (20), à un autre disque de renvoi (21), disposé sur le corps de base (14) et entraînant le rouleau d'entraînement (24) de la bande transporteuse sans fin (4).

3. Dispositif selon la revendication 2, caractérisé en ce que l'entraxe (11) entre le disque d'entraînement (12) et le disque de renvoi (8) destiné à l'entraînement du chariot est égal ou inférieur à l'autre entraxe (43) situé entre l'autre disque d'entraînement (19) et l'autre disque de renvoi (21) prévu pour l'entraînement de la bande transporteuse sans fin (4).

4. Dispositif selon la revendication 2, caractérisé en ce que les moyens d'entraînement (8,20) sont réalisés sous forme de courroies dentées et en ce que le rouleau d'entraînement (24) de la bande transporteuse sans fin (4) est placé entre deux rouleaux de renvoi (22,23) disposé dans le brin tendu de la courroie dentée (20).

5. Dispositif selon la revendication 1, caractérisé en ce qu'un premier entraînement est formé par un moteur (50) assurant l'entraînement continu du chariot (3), par l'intermédiaire de moyens d'entraînement (8) et couplé électriquement à un autre moteur d'entraînement (51) destiné à la bande transporteuse (4), en ce que sa vitesse d'entraînement est proportionnelle à la vitesse de déplacement du chariot (3).

6. Dispositif selon l'une ou plusieurs des revendications précédentes, caractérisé en ce que la courroie transporteuse (4) est réalisée sous forme de bande à auges dans son brin tendu.

7. Dispositif selon l'une ou plusieurs des revendications précédentes, caractérisé en ce que la courroie transporteuse (4) porte sur son rouleau de renvoi (35) un nettoyeur de bande (36), dans le brin mou.

8. Dispositif selon l'une ou plusieurs des revendications précédentes, caractérisé en ce qu'après avoir quitté la courroie transporteuse (4), les particules sont déposées le long d'une goulotte de limitation (34), avant dépose dans la trémie (1).
